# EUROPEAN PATENT APPLICATION

(11) **EP 4 563 213 A1**
(43) Date of publication of application: **04.06.2025**
(21) Application number: 23859675.3
(22) Date of filing: 17.02.2023
(51) Int. Cl.: B01D 53/04

(54) **CARBON DIOXIDE RECOVERY APPARATUS AND CARBON DIOXIDE RECOVERY METHOD**

(30) Priority: 01.09.2022 JP 2022139430
(71) Applicant: Mitsubishi Heavy Industries, Ltd., Tokyo 100-8332 (JP)
(72) Inventor: ONUKI, Takuro, Yokohama-shi, Kanagawa 220-8401 (JP); INUI, Masayuki, Tokyo 100-8332 (JP); KATSUKI, Masatoshi, Tokyo 100-8332 (JP); TSUJIUCHI, Tatsuya, Tokyo 100-8332 (JP); YONEKAWA, Takahito, Yokohama-shi, Kanagawa 220-8401 (JP); MATSUO, Takeshi, Yokohama-shi, Kanagawa 220-8401 (JP); KOSUGI, Yutaka, Yokohama-shi, Kanagawa 220-8401 (JP)
(74) Representative: Studio Torta S.p.A.
(86) International application number: PCT/JP2023/005634
(87) International publication number: WO 2024/047901

(57) **Abstract**

The carbon dioxide recovery apparatus of the present disclosure includes a first adsorption chamber having an intake port and an exhaust port open to an atmosphere; a fan; a damper that is configured to close the first adsorption chamber; a first adsorption unit that is configured to adsorb carbon dioxide; a second adsorption chamber that is formed alongside the first adsorption chamber; a connecting pipe that is configured to connect the first adsorption chamber and the second adsorption chamber to each other; a second adsorption unit that is disposed in the second adsorption chamber and is configured to adsorb carbon dioxide; an on-off valve that is provided on the connecting pipe; a first desorption unit that is configured to desorb the carbon dioxide absorbed by the first adsorption unit; a second desorption unit that is configured to desorb the carbon dioxide absorbed by the second adsorption unit; and a suction unit that is connected to the second adsorption unit and is configured to suck gases in the first adsorption chamber and the second adsorption chamber.

## Description

### TECHNICAL FIELD

The present disclosure relates to a carbon dioxide recovery apparatus and a carbon dioxide recovery method.

Priority is claimed on Japanese Patent Application No. 2022-139430, filed September 1, 2022, the content of which is incorporated herein by reference.

### BACKGROUND ART

In recent years, a concentration of carbon dioxide contained in an atmosphere has attracted attention from a viewpoint of carbon neutrality. As an example of a measure for reducing the concentration of carbon dioxide, a technology called direct air capture (DAC) has been proposed so far. In this technology, a method of adsorbing carbon dioxide contained in the atmosphere guided to an adsorption chamber by an adsorbent, and then reducing the pressure or heating the inside of the adsorption chamber to suction and store carbon dioxide desorbed from an adsorbing material to the outside or to effectively use the carbon dioxide is adopted (for example, see Patent Document 1 and Patent Document 2). In addition, as an example of a technology for adsorbing a gas with an adsorbent, a method for processing a rare gas in a nuclear power generation facility, which is described in Patent Document 3, is known.

Here, in a case where the pressure of the adsorption chamber is lowered in order to desorb carbon dioxide, in order to ensure an airtightness of the adsorption chamber, it is necessary to isolate an inlet and outlet of the adsorption chamber with a damper or the like having high sealing performance. In addition, it is necessary to make the adsorption chamber itself have a high pressure-resistant structure.

### Citation List

### Patent Documents

Patent Document 1: Japanese Patent No. 6659717
Patent Document 2: Japanese Patent No. 6622302
Patent Document 3: Japanese Patent No. 6697535

### SUMMARY OF INVENTION

### Technical Problem

However, preparing a damper having high sealing performance or an adsorption chamber having a high pressure-resistant structure as described above is disadvantageous in terms of manufacturing cost and maintenance cost. Therefore, there has been an increasing demand for a more economical and highly efficient carbon dioxide recovery apparatus.

The present disclosure has been made in order to solve the above-described problems, and an object of the present disclosure is to provide a more economical and highly efficient carbon dioxide recovery apparatus and a carbon dioxide recovery method.

### Solution to Problem

In order to solve the above-described problems, a carbon dioxide recovery apparatus according to the present disclosure includes a first adsorption chamber having an intake port and an exhaust port open to an atmosphere; a fan that is configured to form a flow of air in a direction from the intake port toward the exhaust port; a damper that is configured to close the exhaust port; a first adsorption unit that is disposed in the first adsorption chamber and is configured to adsorb carbon dioxide contained in air; a second adsorption chamber that is formed alongside the first adsorption chamber; a connecting pipe that connects the first adsorption chamber and the second adsorption chamber to each other; a second adsorption unit that is disposed in the second adsorption chamber and is configured to adsorb carbon dioxide contained in a gas flowing into the second adsorption chamber from the connecting pipe; an on-off valve that is provided on the connecting pipe; a first desorption unit that is configured to desorb the carbon dioxide absorbed by the first adsorption unit; a second desorption unit that is configured to desorb the carbon dioxide absorbed by the second adsorption unit; and a suction unit that is connected to the second adsorption unit and is configured to suck gases in the first adsorption chamber and the second adsorption chamber.

The carbon dioxide recovery method according to the present disclosure is a carbon dioxide recovery method using the carbon dioxide recovery apparatus described above, and includes a step of adsorbing carbon dioxide onto the first adsorption unit by driving the fan while opening the damper in a state where the on-off valve is closed; a step of desorbing the carbon dioxide adsorbed onto the first adsorption unit by driving the first desorption unit and adsorbing the carbon dioxide onto the second adsorption unit by driving the suction unit to guide a gas containing the desorbed carbon dioxide to the second adsorption chamber through the connecting pipe, in a state where the damper is closed and the on-off valve is opened; and a step of desorbing the carbon dioxide adsorbed onto the second adsorption unit to guide the carbon dioxide to an outside by driving the suction unit and the second desorption unit, in a state where the on-off valve is closed, in which the step of adsorbing carbon dioxide onto the first adsorption unit and the step of desorbing the carbon dioxide adsorbed onto the second adsorption unit to guide the carbon dioxide to the outside are executed in parallel.

### Advantageous Effects of Invention

According to the present disclosure, it is possible to provide a carbon dioxide recovery apparatus and a carbon dioxide recovery method that are more economical and highly efficient.

### BRIEF DESCRIPTION OF DRAWINGS

[FIG. 1] A schematic view showing the configuration of a carbon dioxide recovery apparatus according to an embodiment of the present disclosure.
[FIG. 2] A flowchart showing each step of a carbon dioxide recovery method according to the embodiment of the present disclosure.
[FIG. 3] An explanatory view showing a state of one step in the carbon dioxide recovery method according to the embodiment of the present disclosure.
[FIG. 4] An explanatory view showing a state of another step in the carbon dioxide recovery method according to the embodiment of the present disclosure.
[FIG. 5] A schematic view showing a modification example of the carbon dioxide recovery apparatus according to the embodiment of the present disclosure.
[FIG. 6] A schematic view showing a modification example of the first adsorption chamber according to the embodiment of the present disclosure.

### DESCRIPTION OF EMBODIMENTS

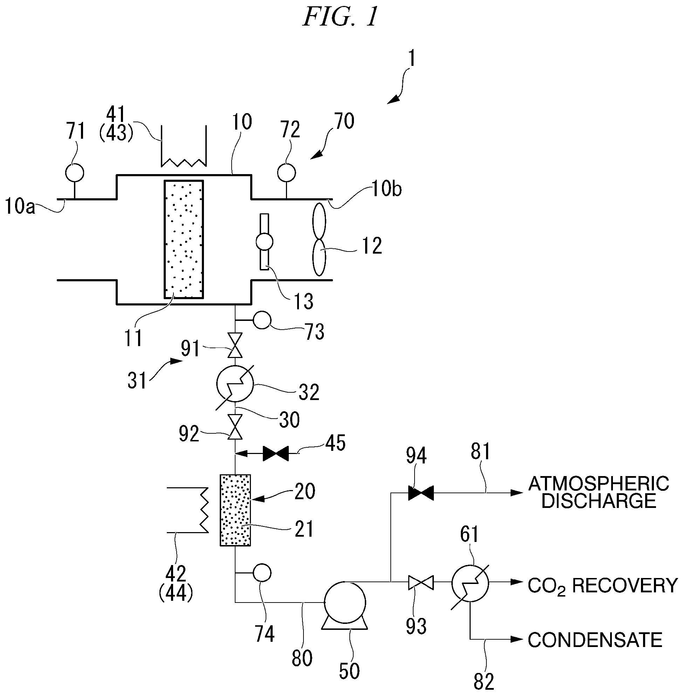

Hereinafter, a carbon dioxide recovery apparatus 1 and a carbon dioxide recovery method according to an embodiment of the present disclosure will be described with reference to FIGS. 1 to 4.

### (Configuration of Carbon Dioxide Recovery Apparatus)

The carbon dioxide recovery apparatus 1 according to the present embodiment is an apparatus for directly adsorbing and recovering carbon dioxide contained in an atmosphere. As shown in FIG. 1, the carbon dioxide recovery apparatus 1 includes a first adsorption chamber 10, a first adsorption unit 11, a fan 12, a damper 13, a second adsorption chamber 20, a second adsorption unit 21, a connecting pipe 30, an on-off valve 31, a first cooler 32, a first desorption unit 41, a second desorption unit 42, a suction unit 50, a second cooler 61, a concentration measurement unit 70, a recovery pipe 80, an atmospheric discharge pipe 81, a condensate discharge pipe 82, a third on-off valve 93, and a fourth on-off valve 94.

The first adsorption chamber 10 has an intake port 10a that is open to the atmosphere and can take in air, and an exhaust port 10b that is provided on a side opposite to the intake port 10a. The exhaust port 10b is provided with a fan 12 that forms a flow of air in a direction from the intake port 10a to the exhaust port 10b. The fan 12 is rotationally driven to generate the above-described flow of air. In the following description, a direction in which air flows is simply referred to as an "upstream side", and an opposite side thereof is referred to as a "downstream side" in some cases.

A damper 13 that can close the exhaust port 10b is provided on an upstream side of the fan 12 in the exhaust port 10b. The damper 13 has a plate shape and is supported to be rotatable about a rotational axis that extends in a horizontal direction perpendicular to a paper surface. The damper 13 has a simple structure, and prevents the introduction of the atmosphere in which carbon dioxide is not collected from the exhaust port 10b to the connecting pipe 30 described later.

A first adsorption unit 11 is disposed inside the first adsorption chamber 10. The first adsorption unit 11 is formed of a substance that is capable of physically or chemically collecting and adsorbing carbon dioxide contained in the air flowing in the first adsorption chamber 10. As the first adsorption unit 11, a porous structure having a low pressure loss and a large specific surface area is used since a ventilation amount is large due to processing of air in the atmosphere having a low concentration of carbon dioxide. As an example, the first adsorption unit 11 has a honeycomb structure having a large number of holes that are open in a flow direction of air. That is, the pressure loss with respect to the flow of air by the first adsorption unit 11 is smaller than that of the second adsorption unit 21 described later. In addition to the honeycomb structure, a lattice-shaped or fibrous adsorbing material may be employed as the first adsorption unit 11.

The first desorption unit 41 is provided in a region that overlaps the first adsorption unit 11 as viewed from a direction perpendicular to a flow direction of the gas in the first adsorption chamber 10, the region being on the inside or the outside of the first adsorption chamber 10. The first desorption unit 41 is provided to regenerate the first adsorption unit 11 by desorbing the carbon dioxide adsorbed by the first adsorption unit 11. In the present embodiment, the first desorption unit 41 is the first heating unit 43. As an example, an electric heater, a heat exchanger that supplies a heating fluid, a microwave heating device, or the like is considered as the first heating unit 43. That is, by operating the first heating unit 43, the first adsorption unit 11 is heated, the adsorbed carbon dioxide is desorbed and mixed with the gas flowing outside, and the first adsorption unit 11 is regenerated.

A first concentration meter 71, which is one of the concentration measurement units 70, is disposed at the intake port 10a. In addition, a second concentration meter 72, which is one of the concentration measurement units 70, is disposed at the exhaust port 10b. The first concentration meter 71 and the second concentration meter 72 measure and quantify the concentration of carbon dioxide contained in the air, and send the concentration of carbon dioxide to the outside as an electric signal to be used as a control signal of the carbon dioxide recovery apparatus 1.

The second adsorption chamber 20 is another space which is formed alongside the first adsorption chamber 10. The second adsorption chamber 20 communicates with the first adsorption chamber 10 through the connecting pipe 30. One end part of the connecting pipe 30 is open to a region on a downstream side of the first adsorption unit 11 in the first adsorption chamber 10. That is, the gas that has passed through the first adsorption unit 11 can flow into the connecting pipe 30. In the connecting pipe 30, the terms "upstream side" and "downstream side" may be used based on the flow direction of the gas flowing from a first adsorption chamber 10 side to a second adsorption chamber 20 side.

It is desirable that the opening portion of the connecting pipe 30 is provided in a vertically downward direction so that a smooth flow is formed by the self-weight in consideration of the specific gravity of carbon dioxide. The second adsorption unit 21 is provided inside the second adsorption chamber 20. The second adsorption unit 21 is formed of a substance capable of adsorbing carbon dioxide contained in the gas, similarly to the first adsorption unit 11. In addition, in order to achieve compactness, a porosity of the second adsorption unit 21 may be lower than a porosity of the first adsorption unit 11 (that is, a density of the second adsorption unit 21 may be higher than a density of the first adsorption unit 11), and the volume of the second adsorption unit 21 may be smaller than the volume of the first adsorption unit 11. The second adsorption unit 21 is, for example, an aggregate of a particle-shaped or honeycomb-shaped adsorbing material having a higher density than the first adsorption chamber. As a result, in the second adsorption unit 21, the amount of carbon dioxide recovered per volume is larger than that in the first adsorption unit 11, and thus the amount of gas leakage remaining in the dead space of the apparatus can be reduced, and a purity of the recovered carbon dioxide can be improved.

A second desorption unit 42 is provided on the inside or the outside of the second adsorption chamber 20. The second desorption unit 42 includes a second heating unit 44 and a water vapor supply unit 45. As an example, the second heating unit 44 is considered to be the same as the first heating unit 43, and examples thereof include an electric heater, a heat exchanger that supplies a heating fluid, or a microwave heating device, and a porous body that generates heat by the supply of current. The second heating unit 44 heats the second adsorption unit 21 to desorb the adsorbed carbon dioxide and regenerates the second adsorption unit 21. The water vapor supply unit 45 is provided for the purpose of promoting the desorption of carbon dioxide from the second adsorption unit 21. The water vapor supply unit 45 can supply water vapor into the connecting pipe 30 from the upstream side of the second adsorption unit 21. A configuration in which the water vapor supply unit 45 is not provided can also be adopted.

On the above-described connecting pipe 30, a third concentration meter 73 (concentration measurement unit 70), a first on-off valve 91 (on-off valve 31), the first cooler 32, and a second on-off valve 92 (on-off valve 31) are arranged in this order from the upstream side to the downstream side. The third concentration meter 73 measures and quantifies the concentration of carbon dioxide in the gas flowing in the connecting pipe 30, and sends the concentration of carbon dioxide as an electric signal to the outside. The first on-off valve 91 and the second on-off valve 92 switch a communication state between the upstream side and the downstream side of the connecting pipe 30. That is, the first adsorption chamber 10 and the second adsorption chamber 20 are isolated from each other by closing the on-off valves 31. The first cooler 32 is provided to cool the gas, which has been heated by the first heating unit 43 as the first desorption unit 41 mentioned above and has become high in temperature. The first cooler 32 can also be omitted depending on the properties, specifications, and state of the second adsorption unit 21 disposed on the downstream side.

A recovery pipe 80 is connected to a downstream side of the second adsorption unit 21. A fourth concentration meter 74 as the concentration measurement unit 70, the suction unit 50, the third on-off valve 93, and the second cooler 61 are provided on the recovery pipe 80 in this order from the upstream side to the downstream side. The fourth concentration meter 74 measures and quantifies the concentration of carbon dioxide in the gas after passing through the second adsorption unit 21, and sends the concentration of carbon dioxide as an electric signal to the outside. The suction unit 50 is a suction pump, and forms a flow of gas from the first adsorption chamber 10 to the recovery pipe 80 by making inside of the recovery pipe 80 negative pressure.

A carbon dioxide storage device (not shown) is connected to an end part of the recovery pipe 80 on the downstream side. In the present embodiment, an example in which the recovery pipe 80 is connected to the storage device is shown, but the connection destination of the recovery pipe 80 is not limited to this, and the recovery pipe 80 may be connected to a carbon dioxide utilization device. The third on-off valve 93 is provided to switch a gas flow state to the storage device. The second cooler 61 is a heat exchanger for cooling and condensing the water vapor supplied by the water vapor supply unit 45. In a case where the water vapor supply unit 45 is not provided, the second cooler 61 is also unnecessary. Condensate generated in the second cooler 61 is discharged to the outside through the condensate discharge pipe 82. In addition, the atmospheric discharge pipe 81 branches off from between the suction unit 50 and the third on-off valve 93 in the recovery pipe 80. The fourth on-off valve 94 is provided in the middle of the atmospheric discharge pipe 81. The fourth on-off valve 94 switches a gas flow state in the atmospheric discharge pipe 81.

### (Regarding Carbon Dioxide Recovery Method)

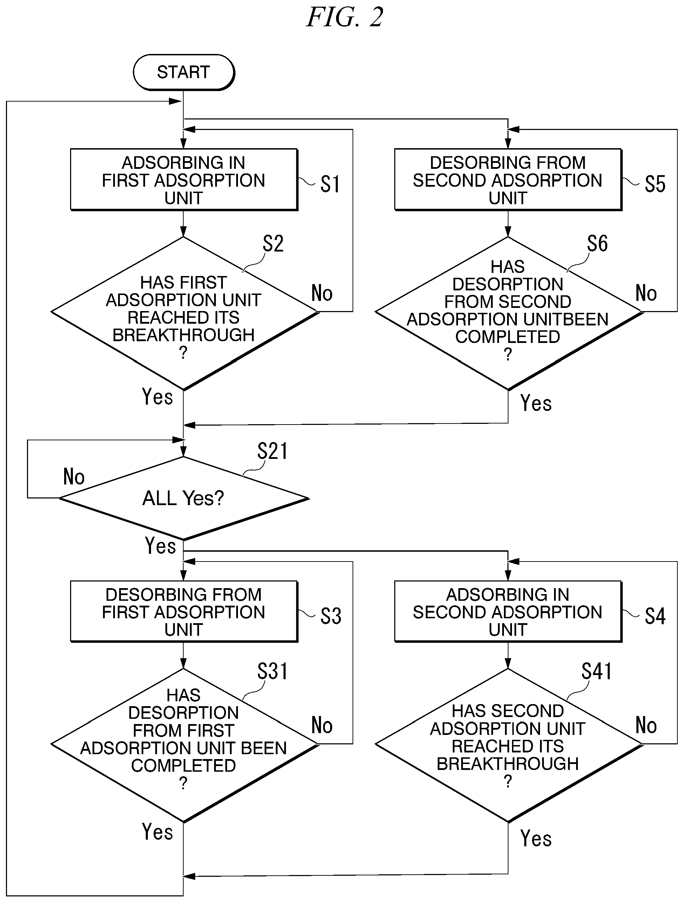

Next, the carbon dioxide recovery method using the carbon dioxide recovery apparatus 1 will be described with reference to FIGS. 2 to 4. As shown in FIG. 2, this method includes a step S1 of adsorbing carbon dioxide in the first adsorption unit 11, a step S2 of determining whether or not the first adsorption unit 11 has completely adsorbed carbon dioxide (whether or not the first adsorption unit 11 has reached its breakthrough), a step S3 of desorbing carbon dioxide from the first adsorption unit 11, a step S31 of determining whether or not desorption from the first adsorption unit 11 has been completed, a step S4 of adsorbing carbon dioxide with the second adsorption unit 21, a step S41 of determining whether or not the second adsorption unit 21 has reached its breakthrough, a step S5 of desorbing carbon dioxide from the second adsorption unit 21, a step S6 of determining whether or not carbon dioxide has completely desorbed from the second adsorption unit 21, and a step S21 of determining whether or not both the step S2 and the step S6 are determined to be Yes.

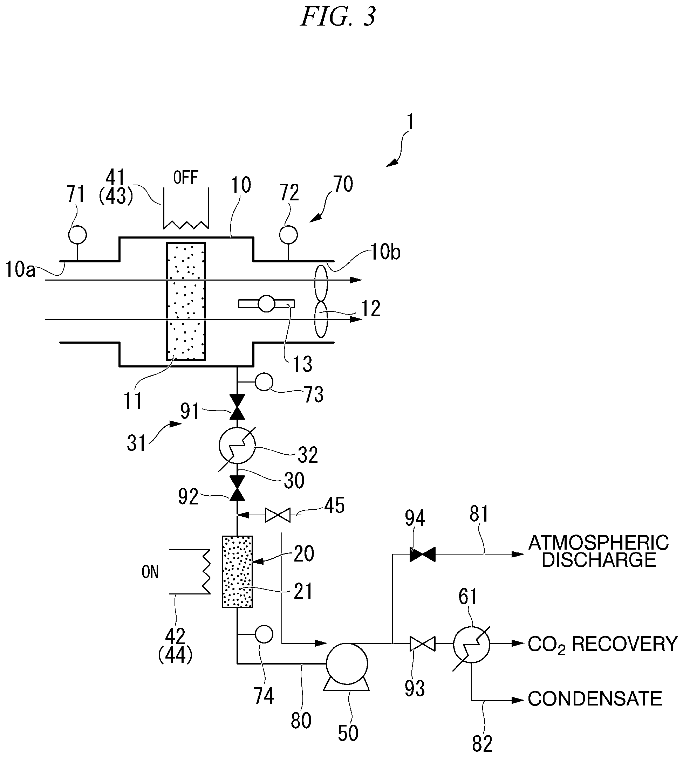

As shown in FIG. 3, in step S1, the on-off valve 31 is in a closed state, and the damper 13 is in an open state. In this state, the fan 12 is driven. As a result, the air (atmosphere) flows into the first adsorption chamber 10 through the intake port 10a. In the middle of the flow from the intake port 10a toward the exhaust port 10b, the air comes into contact with the first adsorption unit 11. As a result, most of the carbon dioxide contained in the air is adsorbed onto the first adsorption unit 11. Next, in step S2, it is determined whether or not the first adsorption unit 11 has reached its breakthrough based on output values of the first concentration meter 71 and the second concentration meter 72. That is, in a case where the carbon dioxide concentration indicated by the first concentration meter 71 is equal to the carbon dioxide concentration indicated by the second concentration meter 72, it means that the adsorption of carbon dioxide by the first adsorption unit 11 is not carried out any further, and thus it is determined that the first adsorption unit 11 has reached its breakthrough. In FIG. 3, the breakthrough state is determined from a difference in the carbon dioxide concentration between the inlet and outlet of the first adsorption unit 11, but in a case where the adsorption characteristics are known, the breakthrough state may be determined by the adsorption time using a timer or the like. Further, in FIG. 3, whether or not the first adsorption unit 11 has reached its breakthrough is determined based on values of the two concentration meters, the first concentration meter 71 and the second concentration meter 72, but it is also possible to determine whether or not the first adsorption unit 11 has reached its breakthrough based on only a value of the second concentration meter 72 without the first concentration meter 71. In this case, since the value of the second concentration meter 72 indicates the concentration of carbon dioxide in the atmosphere, it means that the adsorption of carbon dioxide is not carried out any further, and thus it is determined that the first adsorption unit 11 has reached its breakthrough. In addition, in consideration of operation efficiency, before the complete breakthrough of the first adsorption unit 11, that is, before a state where the value indicated by the second concentration meter 72 is equal to the value indicated by the first concentration meter 71, the difference between the two concentration meters may be integrated, and it may be determined that the first adsorption unit 11 has reached its breakthrough at a stage where a certain amount of adsorption is confirmed.

As shown in FIG. 2, steps S5 and S6 are executed in parallel to steps S1 and S2. That is, while the adsorption of carbon dioxide by the first adsorption unit 11 is being carried out in step S1, the desorption of the carbon dioxide that has already been adsorbed is performed in the second adsorption unit 21 (step S5). The desorption is performed by energizing the second heating unit 44 or supplying a heating fluid to the second heating unit 44 to heat the second adsorption unit 21, and supplying water vapor to the second adsorption unit 21 by the water vapor supply unit 45. By driving the suction unit 50 in this state, the gas containing the desorbed carbon dioxide is sent to the storage device (not shown) through the recovery pipe 80, and the carbon dioxide is recovered.

Next to step S5, in step S6, it is determined whether or not the desorption of carbon dioxide from the second adsorption unit 21 is completed. In step S6, an integrated amount of carbon dioxide desorbed from the carbon dioxide concentration measured by the fourth concentration meter 74 is calculated, and it is determined whether or not the desorption is completed based on a adsorption capacity of the second adsorption unit 21 acquired in advance. That is, in a case where the integrated amount of desorbed carbon dioxide calculated from the carbon dioxide concentration measured by the fourth concentration meter 74 is equal to the carbon dioxide adsorption capacity of the second adsorption unit 21 acquired in advance, it is determined that the desorption is completed since further desorption of carbon dioxide is not expected (step S6: Yes). In a case where the determination result in step S6 is No, the further desorption is carried out by executing step S5 again. In a case where the desorption characteristics of the second adsorption unit 21 are known, a period in which desorption completion is predicted by a timer or the like may be set in advance, and desorption completion may be determined with the passage of the period.

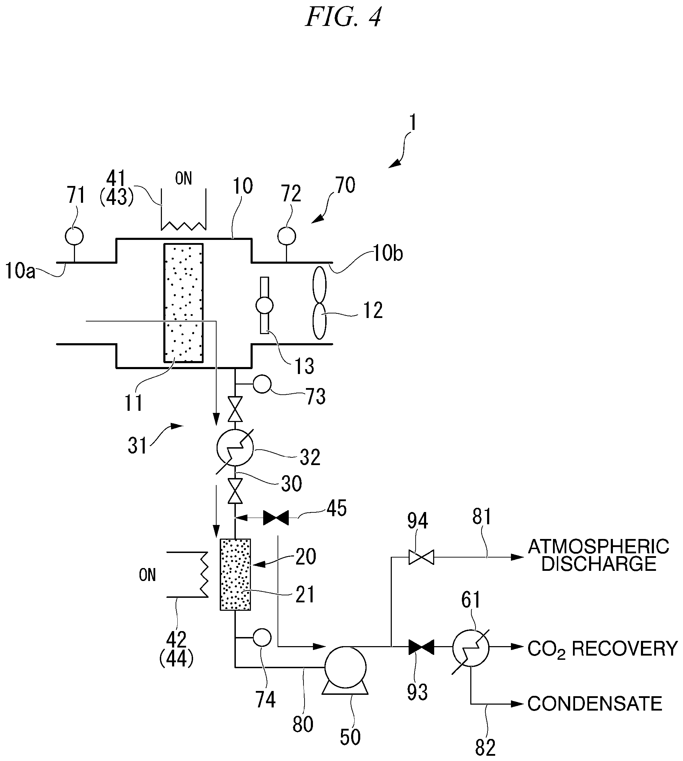

In step S21, it is determined whether or not both of step S2 and step S6 are determined as Yes. In a case where the determination result in step S21 is No, the determination in step S21 is performed again. In a case where a determination result in Step S21 is Yes, the desorption of carbon dioxide from the first adsorption unit 11 in step S3 and the adsorption of carbon dioxide in the second adsorption unit 21 in step S4 are carried out in parallel. Step S3 is realized by energizing the first heating unit 43 or supplying a heating fluid to the first heating unit 43. As shown in FIG. 4, in this case, the on-off valve 31 is in an open state. In addition, the damper 13 is also in a state where the exhaust port 10b is closed. After step S3, it is determined whether or not the desorption and regeneration of the first adsorption unit 11 is completed in step S31. Step S31 is performed by the same processing as that of step S6 described above. In a case where the determination result in step S31 is No, the first adsorption unit 11 is further subjected to desorption and regeneration. In step S4, the gas containing carbon dioxide, which has been desorbed from the first adsorption unit 11, flows into the second adsorption chamber 20 on the downstream side through the connecting pipe 30. As a result, carbon dioxide in the gas is adsorbed onto the second adsorption unit 21. That is, the carbon dioxide adsorbed by the first adsorption unit 11 is further adsorbed by the second adsorption unit 21. Next, in step S41, it is determined whether or not the second adsorption unit 21 has reached its breakthrough. In step S41, an integrated amount of carbon dioxide desorbed from the carbon dioxide concentration measured by the fourth concentration meter 74 is calculated, and it is determined whether or not the desorption is completed based on a adsorption capacity of the second adsorption unit 21 acquired in advance. In a case where the determination result in step S41 is No, step S4 is executed continuously, and the adsorption of carbon dioxide by the second adsorption unit 21 is continued. In a case where the determination result in any one of step S31 or step S41 is Yes, the process returns to step S1 again. This is because, in a case where the adsorption in the first adsorption unit 11 is completed, the gas containing a large amount of carbon dioxide cannot be supplied to the second adsorption unit 21, which is disadvantageous from the viewpoint of ensuring efficiency.

By continuously repeating and executing the above-described steps S1 to S6, the carbon dioxide recovery method according to the present embodiment is realized. Since an adsorption process and a desorption process of carbon dioxide are continuously performed, a pair of carbon dioxide recovery apparatuses 1 that alternately perform opposite operations may be disposed to be combined.

### (Operation and effect)

In recent years, a concentration of carbon dioxide contained in an atmosphere has attracted attention from a viewpoint of carbon neutrality. As an example of a measure for reducing the concentration of carbon dioxide, a technology called direct air capture (DAC) has been proposed so far. In this technology, a method of adsorbing carbon dioxide contained in the atmosphere guided to the adsorption chamber by an adsorbent, and then reducing the pressure in the adsorption chamber or heating the adsorption chamber to suction and store carbon dioxide desorbed from the adsorbing material to the outside or to effectively use the carbon dioxide is adopted.

Here, in a case where the pressure of the adsorption chamber is lowered in order to desorb carbon dioxide, in order to ensure the airtightness of the adsorption chamber, it is necessary to isolate an inlet and outlet of the adsorption chamber with a damper or the like having high sealing performance. In addition, it is necessary to make the adsorption chamber itself have a high pressure-resistant structure. However, preparing a damper having high sealing performance or an adsorption chamber having high pressure performance as described above is disadvantageous in terms of manufacturing cost and maintenance cost. Therefore, there has been an increasing demand for a more economical and highly efficient carbon dioxide recovery apparatus. Therefore, in the present embodiment, the above-described configuration and method are adopted.

According to the above-described configuration, first, the first adsorption unit 11 adsorbs carbon dioxide. After the first adsorption unit 11 is reached its breakthrough, the on-off valve 31 is opened to operate the suction unit 50, whereby the first adsorption unit 11 is regenerated, and at the same time, a gas having a high carbon dioxide concentration flows into the second adsorption unit 21. As a result, the second adsorption unit 21 also adsorbs carbon dioxide. In this way, by connecting the apparatus that adsorbs carbon dioxide in two stages, it is possible to efficiently recover carbon dioxide having high purity under a simple configuration. Further, in a case where the desorption of carbon dioxide from the first adsorption unit 11 is completed, the first adsorption chamber 10 and the second adsorption chamber 20 can be separated from each other by closing the on-off valve 31. Therefore, in the first adsorption chamber 10, the adsorption of carbon dioxide can be further carried out newly, and in the second adsorption chamber 20, the desorption of carbon dioxide can be further promoted. In this way, since the first adsorption chamber 10 and the second adsorption chamber 20 can be separated from each other, the absorption and desorption cycles of both chambers can be independently operated, and an operation time can be shortened to efficiently recover carbon dioxide.

Further, the porosity of the first adsorption unit 11 is larger than the porosity of the second adsorption unit 21, and the volume of the first adsorption unit 11 is larger than the volume of the second adsorption unit 21. According to this configuration, the first adsorption unit 11 can suppress the pressure loss even in a case where a large amount of air flows in while maintaining a sufficient adsorption capacity, and thus high operation efficiency can be achieved in an adsorption operation of carbon dioxide. In addition, since a gas having a high carbon dioxide concentration flows into the second adsorption unit 21, the second adsorption unit 21 can efficiently adsorb carbon dioxide even in a case where the porosity is small and the volume is small. As a result, the dimensions and size of each member can be made compact, and the manufacturing cost and the maintenance cost can be reduced. Further, the amount of residual gas in the apparatus during the adsorption operation is reduced due to the shape with a small void, and thus it is possible to realize improvement in the purity of carbon dioxide to be recovered.

In addition, according to the above-described configuration, the carbon dioxide adsorbed onto the first adsorption unit 11 can be easily desorbed only by heating the first adsorption unit 11 by the first heating unit 43. In particular, since the second adsorption unit 21 performs the second-stage adsorption, it is not necessary to excessively increase the purity of carbon dioxide in the first adsorption unit 11. Therefore, it is not necessary to take measures such as excessively ensuring airtightness of the first adsorption chamber 10, as compared with a method using other pressure swing. As a result, the sealing performance and the pressure resistance performance required for each member can be suppressed to be low. As a result, it is possible to reduce the manufacturing cost and the maintenance cost of the apparatus.

In addition, the second desorption unit 42 further includes a water vapor supply unit 45 that supplies water vapor into the second adsorption chamber 20. According to this configuration, by supplying the water vapor to the second adsorption chamber 20, the desorption of carbon dioxide from the second adsorption unit 21 can be further efficiently carried out.

Furthermore, in the carbon dioxide recovery method, the first adsorption unit 11 first adsorbs carbon dioxide. After the first adsorption unit 11 is reached its breakthrough, the on-off valve 31 is opened to operate the suction unit 50, whereby the first adsorption unit 11 is regenerated, and at the same time, a gas having a high carbon dioxide concentration flows into the second adsorption unit 21. As a result, the second adsorption unit 21 also adsorbs carbon dioxide. In this way, by connecting the apparatus that adsorbs carbon dioxide in two stages, it is possible to efficiently recover carbon dioxide under a simple configuration. Further, in a case where the desorption of carbon dioxide from the first adsorption unit 11 is completed, the first adsorption chamber 10 and the second adsorption chamber 20 can be separated from each other by closing the on-off valve 31. Therefore, in the first adsorption chamber 10, the adsorption of carbon dioxide can be further carried out newly, and in the second adsorption chamber 20, the desorption of carbon dioxide can be further promoted. In this way, since the first adsorption chamber 10 and the second adsorption chamber 20 can be separated from each other, it is possible to make the absorption and desorption cycles of both chambers independent of each other, and an operation time can be shortened to efficiently recover carbon dioxide. Specifically, a step of adsorbing carbon dioxide on the first adsorption unit 11 and a step of desorbing the carbon dioxide adsorbed onto the second adsorption unit 21 and guiding the carbon dioxide to the outside are independently executed. As a result, the time required for the entire recovery operation is shortened, and it is possible to reduce the operating cost of the apparatus.

### (Other Embodiments)

As described above, the embodiment of the present disclosure has been described in detail with reference to the drawings, but the specific configuration is not limited to this embodiment, and includes design changes and the like without departing from the scope of the present disclosure.

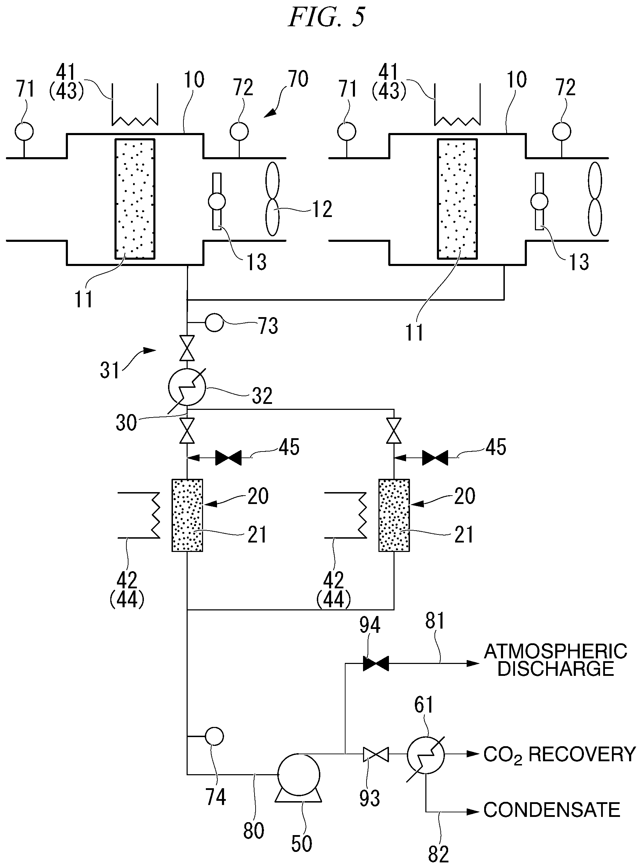

For example, as shown in FIG. 5 as a modification example, a configuration in which a plurality of (for example, two) first adsorption chambers 10 arranged in parallel with each other and a plurality of (for example, two) second adsorption chambers 20 connected in parallel are provided can also be adopted. In this case, it is desirable that a total value of the porosities and the volumes of the plurality of second adsorption units 21 is smaller than the total value of the porosities and the volumes of the plurality of first adsorption units 11. In the example of FIG. 5, the configuration is shown in which two first adsorption chambers 10 and two second adsorption chambers 20 are provided, but the number of second adsorption chambers 20 can be made smaller than the number of first adsorption chambers 10 by the adsorption and desorption performance of the adsorbing material. In this case, a dimensional size of the carbon dioxide recovery apparatus 1 can be made more compact. In addition, for example, in a case where the adsorption time in the first adsorption chamber 10 is considerably longer than the time required for the regeneration of the second adsorption unit 21 of the second adsorption chamber 20, a configuration can be adopted in which the first adsorption chamber 10 is made parallel, the regeneration is performed by shifting the timing of both, and the adsorption time of the second adsorption unit 21 is increased. In addition, the opposite relationship can also be established.

According to this configuration, since the plurality of first adsorption units 11 arranged in parallel and the plurality of second adsorption units 21 arranged in parallel are provided, a system configuration can be changed according to the performance of the adsorbing material filled in the first adsorption unit 11 and the second adsorption unit 21. In this manner, it is possible to realize an ideal operating condition suitable for each adsorbent regardless of the type of the adsorbing material.

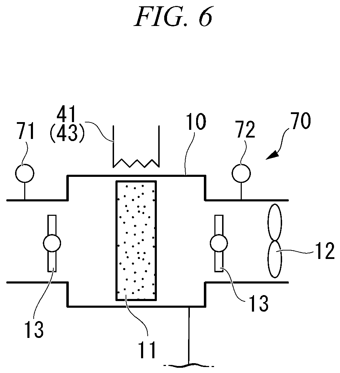

In addition, as shown in FIG. 6, another damper 13 can be provided on an intake port 10a side of the first adsorption chamber 10. In this case, in a case where air is sucked from the first adsorption chamber 10 to recover carbon dioxide, air is less likely to enter from the outside, and thus the carbon dioxide concentration of the recovered gas can be further increased.

Further, in the above-described embodiment, an example of a temperature swing using the second heating unit 44 and the water vapor supply unit 45 as the second desorption unit 42 has been described. However, the aspect of the second desorption unit 42 is not limited to these, and an apparatus that performs pressure swing can also be used as the second desorption unit 42. In addition, in the above-described embodiment, the two-stage configuration in which the first adsorption unit 11 and the second adsorption unit 21 are provided is adopted, but the present invention is not limited thereto, and a multi-stage configuration of three or more stages may be adopted. According to the configuration, carbon dioxide can be recovered at a higher concentration.

### <Appendix>

The carbon dioxide recovery apparatus 1 and the carbon dioxide recovery method described in each embodiment are understood as follows, for example.
(1) A carbon dioxide recovery apparatus 1 according to a first aspect includes a first adsorption chamber 10 having an intake port 10a and an exhaust port 10b open to an atmosphere; a fan 12 that is configured to form a flow of air in a direction from the intake port 10a toward the exhaust port 10b; a damper 13 that is configured to close the exhaust port 10b; a first adsorption unit 11 that is disposed in the first adsorption chamber 10 and is configured to adsorb carbon dioxide contained in air; a second adsorption chamber 20 that is formed alongside the first adsorption chamber 10; a connecting pipe 30 that connects the first adsorption chamber 10 and the second adsorption chamber 20 to each other; a second adsorption unit 21 that is disposed in the second adsorption chamber 20 and is configured to adsorb carbon dioxide contained in a gas flowing into the second adsorption chamber 20 from the connecting pipe 30; an on-off valve 31 that is provided on the connecting pipe 30; a first desorption unit 41 that is configured to desorb the carbon dioxide absorbed by the first adsorption unit 11; a second desorption unit 42 that is configured to desorb the carbon dioxide absorbed by the second adsorption unit 21; and a suction unit 50 that is connected to the second adsorption unit 21 and is configured to suck gases in the first adsorption chamber 10 and the second adsorption chamber 20.

According to the above-described configuration, first, the first adsorption unit 11 adsorbs carbon dioxide. After the first adsorption unit 11 is reached its breakthrough, the on-off valve 31 is opened to operate the suction unit 50, whereby the first adsorption unit 11 is regenerated, and at the same time, a gas having a high carbon dioxide concentration flows into the second adsorption unit 21. As a result, the second adsorption unit 21 also adsorbs carbon dioxide. In this way, by connecting the apparatus that adsorbs carbon dioxide in two stages, it is possible to efficiently recover carbon dioxide under a simple configuration.

(2) The carbon dioxide recovery apparatus 1 according to a second aspect is the carbon dioxide recovery apparatus 1 according to the first aspect, in which a porosity of the first adsorption unit 11 is larger than a porosity of the second adsorption unit 21, and the volume of the first adsorption unit 11 is larger than the volume of the second adsorption unit 21.

According to the above-described configuration, a large amount of air (atmosphere) flows into the first adsorption unit 11, and thus, the porosity is high and the volume is large, whereby it is possible to adsorb a larger amount of carbon dioxide while reducing the pressure loss. In addition, since a gas having a high carbon dioxide concentration flows into the second adsorption unit 21, the second adsorption unit 21 can efficiently adsorb carbon dioxide even in a case where the porosity is small and the volume is small. As a result, it is possible to reduce the manufacturing cost and the maintenance cost of each member.

(3) The carbon dioxide recovery apparatus 1 according to a third aspect is the carbon dioxide recovery apparatus 1 according to the first or second aspect, in which the first desorption unit 41 is a first heating unit 43 that is configured to heat the first adsorption unit 11.

According to the above-described configuration, the carbon dioxide adsorbed onto the first adsorption unit 11 can be easily desorbed only by heating the first adsorption unit 11 by the first heating unit 43. That is, the sealing performance and the pressure resistance performance required for each member can be reduced as compared with the method using the other pressure swing, and the cost can be reduced.

(4) The carbon dioxide recovery apparatus 1 according to a fourth aspect is the carbon dioxide recovery apparatus 1 according to any one of the first to third aspects, in which the second desorption unit 42 is a second heating unit 44 that is configured to heat the second adsorption unit 21.

According to the above-described configuration, the carbon dioxide adsorbed onto the second adsorption unit 21 can be easily desorbed only by heating the second adsorption unit 21 by the second heating unit 44. That is, the sealing performance and the pressure resistance performance required for each member can be reduced as compared with the method using the other pressure swing, and the cost can be reduced.

(5) The carbon dioxide recovery apparatus 1 according to a fifth aspect is the carbon dioxide recovery apparatus according to any one of the first to third aspects, in which the second desorption unit 42 is the suction unit 50 that is connected to the second adsorption unit 21 and is configured to suck the gas in the second adsorption chamber 20.

According to the above configuration, it is possible to easily desorb carbon dioxide from the second adsorption unit 21 only by the suction of the suction unit 50 without providing another device for heating the second adsorption unit 21.

(6) The carbon dioxide recovery apparatus 1 according to a sixth aspect is the carbon dioxide recovery apparatus 1 according to any one of the first to fifth aspects, in which the second desorption unit 42 further includes a water vapor supply unit 45 that is configured to supply water vapor into the second adsorption chamber 20.

According to the above described configuration, by supplying the water vapor to the second adsorption chamber 20, the desorption of carbon dioxide from the second adsorption unit 21 can be further efficiently promoted.

(7) The carbon dioxide recovery apparatus 1 according to a seventh aspect is the carbon dioxide recovery apparatus 1 according to any one of the first to sixth aspects, further including a single or a plurality of the first adsorption chambers 10 that are arranged in parallel, and the first adsorption units 11; and a single or a plurality of the second adsorption chambers 20 that are arranged in parallel, and the second adsorption units 21.

According to the above-described configuration, since the single or the plurality of first adsorption units 11 that are arranged in parallel and the single or the plurality of second adsorption units 21 that are arranged in parallel are provided, it is possible to further recover a large amount of carbon dioxide having a high purity in a short time.

(8) The carbon dioxide recovery apparatus 1 according to an eighth aspect is the carbon dioxide recovery apparatus 1 according to the seventh aspect, in which a total value of porosities and volumes of the plurality of second adsorption units 21 is smaller than a total value of porosities and volumes of the plurality of first adsorption units 11.

According to the above described configuration, the first adsorption unit 11 can suppress the pressure loss even in a case where a large amount of air flows in while maintaining a sufficient adsorption capacity, and thus high operation efficiency can be achieved in an adsorption operation of carbon dioxide. In addition, since a gas having a high carbon dioxide concentration flows into the second adsorption unit 21, the second adsorption unit 21 can efficiently adsorb carbon dioxide even in a case where the porosity is small and the volume is small. As a result, the dimensions and size of each member can be made compact, and the manufacturing cost and the maintenance cost can be reduced.

(9) A carbon dioxide recovery method according to the ninth aspect is a carbon dioxide recovery method using the carbon dioxide recovery apparatus 1 of the first aspect, the carbon dioxide recovery method including a step of adsorbing carbon dioxide onto the first adsorption unit 11 by driving the fan 12 while opening the damper 13 in a state where the on-off valve 31 is closed; a step of desorbing the carbon dioxide adsorbed onto the first adsorption unit 11 by driving the first desorption unit 41 and adsorbing the carbon dioxide onto the second adsorption unit 21 by driving the suction unit 50 to guide a gas containing the desorbed carbon dioxide to the second adsorption chamber 20 through the connecting pipe 30, in a state where the damper 13 is closed and the on-off valve 31 is opened; and a step of desorbing the carbon dioxide adsorbed onto the second adsorption unit 21 to guide the carbon dioxide to an outside by driving the suction unit 50 and the second desorption unit 42, in a state where the on-off valve 31 is closed, in which the step of adsorbing carbon dioxide onto the first adsorption unit 11 and the step of desorbing the carbon dioxide adsorbed onto the second adsorption unit 21 to guide the carbon dioxide to the outside are executed in parallel.

According to the above-described configuration, first, the first adsorption unit 11 adsorbs carbon dioxide. After the first adsorption unit 11 is reached its breakthrough, the on-off valve 31 is opened to operate the suction unit 50, whereby the first adsorption unit 11 is regenerated, and at the same time, a gas having a high carbon dioxide concentration flows into the second adsorption unit 21. As a result, the second adsorption unit 21 also adsorbs carbon dioxide. In this way, by connecting the apparatus that adsorbs carbon dioxide in two stages, it is possible to efficiently recover carbon dioxide under a simple configuration. In addition, a step of adsorbing carbon dioxide on the first adsorption unit 11 and a step of desorbing the carbon dioxide adsorbed onto the second adsorption unit 21 and guiding the carbon dioxide to the outside are executed in parallel. As a result, the time required for the entire recovery operation is shortened, and it is possible to reduce the operating cost of the apparatus.

### INDUSTRIAL APPLICABILITY

The present disclosure relates to an economically and highly efficient carbon dioxide recovery apparatus and a carbon dioxide recovery method.

### REFERENCE SIGNS LIST

1 Carbon dioxide recovery apparatus
10 First adsorption chamber
10a Intake port
10b Exhaust port
11 First adsorption unit
12 Fan
13 Damper
20 Second adsorption chamber
21 Second adsorption unit
30 Connecting pipe
31 On-off valve
32 First cooler
41 First desorption unit
42 Second desorption unit
43 First heating unit
44 Second heating unit
45 Water vapor supply unit
50 Suction unit
61 Second cooler
70 Concentration measurement unit
71 First concentration meter
72 Second concentration meter
73 Third concentration meter
74 Fourth concentration meter
80 Recovery pipe
81 Atmospheric discharge pipe
82 Condensate discharge pipe
91 First on-off valve
92 Second on-off valve
93 Third on-off valve
94 Fourth on-off valve

## Claims

1. A carbon dioxide recovery apparatus comprising:
a first adsorption chamber having an intake port and an exhaust port open to an atmosphere;
a fan that is configured to form a flow of air in a direction from the intake port toward the exhaust port;
a damper that is configured to close the exhaust port;
a first adsorption unit that is disposed in the first adsorption chamber and is configured to adsorb carbon dioxide contained in air;
a second adsorption chamber that is formed alongside the first adsorption chamber;
a connecting pipe that connects the first adsorption chamber and the second adsorption chamber to each other;
a second adsorption unit that is disposed in the second adsorption chamber and is configured to adsorb carbon dioxide contained in a gas flowing into the second adsorption chamber from the connecting pipe;
an on-off valve that is provided on the connecting pipe;
a first desorption unit that is configured to desorb the carbon dioxide absorbed by the first adsorption unit;
a second desorption unit that is configured to desorb the carbon dioxide absorbed by the second adsorption unit; and
a suction unit that is connected to the second adsorption unit and is configured to suck gases in the first adsorption chamber and the second adsorption chamber.

2. The carbon dioxide recovery apparatus according to Claim 1,
wherein a porosity of the first adsorption unit is larger than a porosity of the second adsorption unit, and a volume of the first adsorption unit is larger than a volume of the second adsorption unit.

3. The carbon dioxide recovery apparatus according to Claim 1 or 2,
wherein the first desorption unit is a first heating unit that is configured to heat the first adsorption unit.

4. The carbon dioxide recovery apparatus according to Claim 1 or 2,
wherein the second desorption unit is a second heating unit that is configured to heat the second adsorption unit.

5. The carbon dioxide recovery apparatus according to Claim 1 or 2,
wherein the second desorption unit is the suction unit that is connected to the second adsorption unit and is configured to suck the gas in the second adsorption chamber.

6. The carbon dioxide recovery apparatus according to Claim 1 or 2,
wherein the second desorption unit further includes a water vapor supply unit that is configured to supply water vapor into the second adsorption chamber.

7. The carbon dioxide recovery apparatus according to Claim 1, further comprising:
a single or a plurality of the first adsorption chambers and the first adsorption units that are arranged in parallel; and
a single or a plurality of the second adsorption chambers and the second adsorption units that are arranged in parallel.

8. The carbon dioxide recovery apparatus according to Claim 7,
wherein a total value of porosities and volumes of the plurality of second adsorption units is smaller than a total value of porosities and volumes of the plurality of first adsorption units.

9. A carbon dioxide recovery method using the carbon dioxide recovery apparatus according to Claim 1, the carbon dioxide recovery method comprising:
a step of adsorbing carbon dioxide onto the first adsorption unit by driving the fan while opening the damper in a state where the on-off valve is closed;
a step of desorbing the carbon dioxide adsorbed onto the first adsorption unit by driving the first desorption unit and adsorbing the carbon dioxide onto the second adsorption unit by driving the suction unit to guide a gas containing the desorbed carbon dioxide to the second adsorption chamber through the connecting pipe, in a state where the damper is closed and the on-off valve is opened; and
a step of desorbing the carbon dioxide adsorbed onto the second adsorption unit to guide the carbon dioxide to an outside by driving the suction unit and the second desorption unit, in a state where the on-off valve is closed,
wherein the step of adsorbing carbon dioxide onto the first adsorption unit and the step of desorbing the carbon dioxide adsorbed onto the second adsorption unit to guide the carbon dioxide to the outside are executed in parallel.
